# EUROPÄISCHE PATENTANMELDUNG

(11) **EP 2 799 904 A2**
(43) Veröffentlichungstag der Anmeldung: **05.11.2014**
(21) Anmeldenummer: 14165846.8
(22) Anmeldetag: 24.04.2014
(51) Int. Cl.: G01S 13/92, G08G 1/054

(54) **Verfahren zum Erfassen und Dokumentieren der Geschwindigkeiten mehrerer Fahrzeuge in einem Bilddokument**

(30) Priorität: 30.04.2013 DE 102013104411
(71) Anmelder: Jenoptik Robot GmbH, 40789 Monheim (DE)
(72) Erfinder: Schmitz, Ralf, 51674 Wiehl (DE)
(74) Vertreter: Schaller, Renate

(57) **Zusammenfassung**

Die Erfindung betrifft ein Verfahren zum Erfassen und Dokumentieren der Geschwindigkeiten mehrerer Fahrzeuge in einem Bilddokument. Die mehreren Fahrzeuge durchfahren zeitgleich den Messbereich einer strahlenbasierten mehrzielfähigen Messeinrichtung. Aus den Messergebnissen werden fahrzeugspezifische Messdaten gewonnen, aus denen messzeitpunkt- und fahrzeugbezogen Messdatensätze gebildet und abgelegt werden. Verursacht durch eines der Fahrzeuge, welches mit einer Geschwindigkeit oberhalb eines Grenzwertes fährt, wird eine Kamera ausgelöst. Aus den damit erhaltenen Bilddaten und den letzten abgelegten Messdatensätzen wird ein Bilddokument generiert, in dem zu den abgebildeten Fahrzeugen zugeordnet jeweils eine Geschwindigkeit dargestellt ist.

## Beschreibung

Die Erfindung betrifft ein Verfahren zum Erfassen und Dokumentieren der Geschwindigkeiten mehrerer Fahrzeuge wie es gattungsgemäß aus dem EP 2 075 775 B1 bekannt ist.

Aus dem Stand der Technik sind eine Vielzahl von Verfahren zur Erfassung von Geschwindigkeitsverstößen bekannt, bei denen mit der Detektion eines Fahrzeuges mit überhöhter Geschwindigkeit (Verletzerfahrzeug) eine Kamera ausgelöst wird, um von dem Verletzerfahrzeug eine Aufnahme zu erstellen und Bilddaten zu erfassen.

Von der Anwendung her unterscheiden sich die Verfahren zur Erfassung von Geschwindigkeitsverstößen und dazu geeignete Vorrichtungen in solche, bei denen der Messbereich einer Messeinrichtung und das Objektfeld einer Kamera auf nur einen Fahrbahnstreifen einer Fahrbahn beschränkt sind und in solche, bei denen der Messbereich und das Objektfeld mehrere Fahrbahnstreifen einer Fahrbahn überdecken.

Mittels einer Messeinrichtung, das können auf oder in der Fahrbahn befindliche Sensoren, Radarmessgeräte, Lasermessgeräte oder auch Videokameras mit Bildverarbeitungssystemen sein, werden die den Messbereich durchfahrenden Fahrzeuge angemessen. Aus den Messergebnissen werden die jeweils interessierenden fahrzeugspezifischen Messdaten, den Fahrzeugen zugeordnet, ermittelt.

Messeinrichtungen die zur Erfassung mehrerer Fahrbahnstreifen verwendet werden, sind in der Lage, gleichzeitig mehrere Fahrzeuge so zu erfassen, dass diese anhand der fahrzeugspezifischen Messdaten voneinander unterschieden und getrennt verwaltet werden können. Diese mehrzielfähigen, auch multitargetfähig genannten Messeinrichtungen liefern als interessierende fahrzeugspezifische Daten neben der Fahrzeuggeschwindigkeit und der Entfernung zur Messeinrichtung auch den Winkel zu einer durch die Messeinrichtung definierten Achse. Dadurch können insbesondere auf unterschiedlichen Fahrbahnstreifen auch nebeneinander fahrende Fahrzeuge zeitgleich und voneinander differenzierbar erfasst werden.

Die Fahrzeuge werden, während sie durch den Messbereich fahren, durch Einzelmessungen zu mehreren zeitlich aufeinanderfolgenden Messzeitpunkten erfasst. Aus den Messergebnissen mehrerer zeitlich aufeinanderfolgender Einzelmessungen, die jeweils pro Fahrzeug einen Messdatensatz liefern, lassen sich weitere spezifische Fahrzeugdaten ableiten, wie der Spurverlauf der erfassten Fahrzeuge oder deren Fahrzeuglänge, womit die Fahrzeuge sicher differenziert werden können. Hauptsächlich sind jedoch mehrere Einzelmessungen erforderlich, um Fahrzeuge zu erkennen und gemessene Geschwindigkeiten zu verifizieren. Die verifizierte Geschwindigkeit wird dann mit einem vorgegebenen Grenzwert verglichen. Das kann bei Erreichen einer Triggerlinie sein oder auch bevor das angemessene Fahrzeug eine Triggerlinie erreicht. Im erstgenannten Fall wird unmittelbar, nachdem durch Vergleich gegebenenfalls eine überhöhte Geschwindigkeit festgestellt wurde, die Kamera ausgelöst. Im zweitgenannten Fall wird in Kenntnis der überhöhten Geschwindigkeit eine Prognose erstellt, wann das Fahrzeug die Triggerlinie erreicht, und die Kamera nach einer Verzögerungszeit zu dem prognostizierten Zeitpunkt ausgelöst. Ein das Auslösen der Kamera verursachendes Fahrzeug gilt als identifiziertes Verletzerfahrzeug und der diesem identifizierten Verletzterfahrzeug zuletzt zugeordnete Messdatensatz wird gemeinsam mit Identifikationsdaten, wie Datum, Uhrzeit, Ort und Gerätekennung der Messeinrichtung, abgespeichert. Dabei bleiben die gleichzeitig erfassten Messdatensätze weiterer Fahrzeuge, wenn diese nicht zeitgleich eine Triggerlinie erreicht haben, unberücksichtigt und werden nicht weiter ausgewertet. In der Regel ist jedem Fahrbahnstreifen eine virtuelle Triggerlinie zugeordnet, die jeweils einen gleichen Abstand zur Kamera haben.

Mit dem Auslösen der Kamera wird das identifizierte Verletzerfahrzeug, gegebenenfalls gemeinsam mit weiteren sich im Objektfeld der Kamera befindenden Fahrzeugen, in einer Bildaufnahme aufgenommen und die gewonnenen Bilddaten werden abgespeichert.

Gemäß dem Stand der Technik werden der Messdatensatz des identifizierten Verletzerfahrzeuges und die für die Darstellung des Verletzerfahrzeuges relevanten Bilddaten, als Bilddatensatzes, einander zugeordnet abgespeichert. Die eindeutige Zuordnung der im Messdatensatz enthaltenen fahrzeugspezifischen Daten des identifizierten Verletzerfahrzeuges zu den im Bilddatensatz abgespeicherten Bilddaten des identifizierten Verletzerfahrzeuges ist möglich, da das Anmessen des Verletzerfahrzeuges und dessen Bildaufnahme miteinander verknüpfte Handlungen sind, die, wie erläutert, in einer bekannten zeitlichen Korrelation zueinander stehen.

Wann ein Messdatensatz und die Bilddaten oder nur die im Bilddaten des identifizierten Verletzerfahrzeuges, das heißt ein Bilddatensatz, einander zugeordnet werden, ist unerheblich. Sie können unmittelbar nach der Datengewinnung oder zu einem späteren Zeitpunkt zusammengeführt und gemeinsam als Fahrzeugdatenpaket gespeichert werden. Als Beweis für den Verkehrsverstoß werden die Bilddaten bzw. der Bilddatensatz und Messdatensatz des identifizierten Verletzerfahrzeuges sowie die abgespeicherten Identifikationsdaten, wie Datum, Uhrzeit, Ort und Gerätekennung der Messeinrichtung, als ein Bilddokument mit einem Bild und einer eingeblendeten Datenzeile ausgedruckt oder angezeigt.

Diese Art der Datenverwertung und Datenanzeige hat sich als nachteilig erwiesen für Lösungen, bei denen gleichzeitig mehrere Fahrzeuge angemessen werden können.

Nachdem durch ein erstes identifiziertes Verletzerfahrzeug die Kamera ausgelöst wurde, ist die Kamera für die Dauer eines Totzeitraums nicht bereit, durch ein zweites identifiziertes Verletzerfahrzeug ausgelöst zu werden. Dieser Totzeitraum entspricht mindestens der Prozessverarbeitungszeit der Kamera, kann aber auch deutlich länger sein, falls mit einer ersten Bildaufnahme Folgeaufnahmen initiiert werden.

Für Fahrzeuge, die in diesem sich ergebenden Totzeitraum der Kamera ebenfalls als Verletzerfahrzeuge identifiziert werden, gibt es keine Bildaufnahmen, also auch keinen zuzuordnenden Bilddatensatz. Das heißt, diese Verkehrsverstöße werden nicht geahndet.

Weiterhin hat es sich als nachteilig erwiesen, wenn bei wellenstrahlbasierten Messverfahren mehrere Fahrzeuge in dem Bilddatensatz erfasst sind, weil dann angehörte Fahrer oder Fahrzeughalter immer wieder argumentieren, dass die Bildaufnahme (Verstoßbild) durch ein anderes, als das eigene Fahrzeug ausgelöst wurde.

Eine triviale Lösung dieses Problems wäre es, indem pro Fahrbahnstreifen eine Kamera installiert wird, die jeweils dann aktiviert wird, wenn ein diesem Fahrbahnstreifen zuzuordnender Verstoß erfasst wird. Dies führt jedoch für den Betreiber zu höheren Anschaffungs-, Installations- und Wartungskosten.

Aus dem europäischen Patent EP 2 075 775 B1 ist ein Verfahren zur Dokumentation nahezu zeitgleicher Verkehrsverstöße bekannt, welches dem Problem Abhilfe verschafft, während dem Totzeitraum der Kamera keine Bildaufnahmen von weiteren identifizierten Verletzerfahrzeugen erstellen zu können. Danach werden in einem mehrere Fahrbahnstreifen umfassenden Messbereich von durchfahrenden Fahrzeugen Messdaten erfasst. Gleich dem Stand der Technik, werden die zu einem ersten Fahrzeug erfassten Messdaten zu einem ersten Messzeitpunkt abgespeichert und es wird eine Kamera zu einem Aufnahmezeitpunkt ausgelöst, der eine bekannte zeitliche Korrelation zu dem ersten Messzeitpunkt hat. Die Bildaufnahme und die damit gewonnenen Bilddaten werden den Messdaten des ersten Fahrzeuges zugeordnet. Gemäß dem vorbenannten Patent EP 2 075 775 B1 werden dann jedoch die gewonnenen Bilddaten vervielfältigt und auch den Messdaten weiterer Messzeitpunkte und erfasster Fahrzeuge jeweils zugeordnet, wenn diese jeweils innerhalb eines vorgegebenen Zeitintervalls nach dem ersten Messzeitpunkt liegen. Mit Hilfe der mit einer Bildaufnahme gewonnenen Bilddaten und den Messdaten der erfassten Fahrzeuge (hier Messdatenpakete genannt) kann somit pro Fahrzeug ein Fahrzeugdatenpaket unter Nutzung der gleichen Bilddaten gebildet werden. Praktisch kann dann pro Fahrzeugdatenpaket ein Bilddokument abgespeichert und bei Bedarf ausgedruckt werden, welches das Bild einer gleichen Szene darstellt. In der eingeblendeten Datenzeile sind dann die Identifikationsdaten, wie Datum, Uhrzeit und Geräteidentifikationsangaben, identisch. Jedoch sind in den einzelnen Bilddokumenten unterschiedliche, in der Szene abgebildete Fahrzeuge identifiziert, z. B. durch die Angabe eines Fahrbahnstreifens in der Datenzeile und die Geschwindigkeit des jeweils identifizierten Fahrzeuges,.

In diesen Bilddokumenten ist entsprechend nur die Information zu einem der abgebildeten Fahrzeuge gegeben. Das beschriebene Verfahren erfordert insbesondere aufgrund der Vervielfältigung der Bilddokumente einen verhältnismäßig hohen Rechen- und/oder Speicheraufwand. Weiterhin bleibt das Problem bestehen, dass Fahrer oder Fahrzeughalter argumentieren, dass das Verstoßbild durch ein anderes, als das eigene Fahrzeug ausgelöst wurde.

Der Erfindung liegt die Aufgabe zu Grunde, ein Verfahren zu schaffen, mit dem bei einem messtechnisch erfassten Verkehrsverstoß alle gleichzeitig messtechnisch erfassten Fahrzeuge dokumentiert werden können.

Diese Aufgabe wird für ein Verfahren zur Dokumentation der Geschwindigkeiten mehrerer zeitgleich auf einer Fahrbahn fahrenden Fahrzeuge gelöst, bei dem von Fahrzeugen, die zeitgleich einen mehrere Fahrbahnstreifen einer Fahrbahn überdeckenden Messbereich einer strahlenbasierten mehrzielfähigen Messeinrichtung durchfahren, zu mehreren Messzeitpunkten fahrzeugspezifische Messdaten, zu denen Geschwindigkeiten und Entfernungen gehören, erfasst werden und messzeitpunkt- und fahrzeugbezogen als Messdatensätze abgelegt werden, sobald die Fahrzeuge anhand der Messdaten identifiziert werden können.

Bei Erreichen eines Triggerpunktes durch eines der Fahrzeuge wird dessen Geschwindigkeit mit einem Grenzwert verglichen und bei Feststellung der Geschwindigkeit oberhalb des Grenzwertes, wird das betreffende Fahrzeug als Verletzerfahrzeug identifiziert. Im gegebenen Falle wird eine Kamera ausgelöst und es wird eine Bildaufnahme erstellt mit einer Abbildung von dem Verletzerfahrzeug. Es wird der letzte zuvor abgelegte Messdatensatz des Verletzerfahrzeuges gemeinsam mit einem durch die Bildaufnahme gewonnen Bilddatensatz und mit Identifikationsdaten, wie Datum, Uhrzeit, Ort und Kennung der Messeinrichtung, als ein Datenpaket abgespeichert. Aus dem Datenpaket wird ein Bilddokument generiert, in dem der Abbildung des Verletzerfahrzeuges zugeordnet, dessen Geschwindigkeit dargestellt ist.

Es ist erfindungswesentlich, dass auch die zuletzt abgelegten Messdatensätze der zeitgleich erfassten und identifizierten Fahrzeuge dem Datenpaket zugeordnet abgespeichert werden. Damit ist es möglich, den in der Bildaufnahme dargestellten Abbildungen zeitgleich erfasster und identifizierter Fahrzeuge Geschwindigkeiten zuzuordnen und in dem Bilddokument den Abbildungen zugeordnet darzustellen.

Vorteilhaft werden nur zu den Abbildungen der zeitgleich erfassten und identifizierten Fahrzeuge deren Geschwindigkeit zugeordnet dargestellt, deren mit dem Datenpaket abgespeicherter Messdatensatz eine Entfernung zur Messeinrichtung oder zur Triggerlinie umfasst, die beim Auslösen der Kamera unterhalb eines vorgegebenen Schwellwertes liegt. Zu diesem Zweck werden die mit den gespeicherten Messdatensätzen vorliegenden Entfernungen mit einem vorgegebenen Schwellwert verglichen. Dieser Schwellwert ist vorteilhaft eine Entfernung, in der innerhalb des Bilddokumentes z. B. ein Kennzeichen noch mit bloßem Auge sicher lesbar ist. Vorteilhaft können die Geschwindigkeiten aller abgespeicherten Messdatensätze der zeitgleich erfassten und identifizierten Fahrzeuge mit dem Grenzwert verglichen werden und es wird, nur den Abbildungen der zeitgleich erfassten und identifizierten Fahrzeuge zugeordnet, deren Geschwindigkeit dargestellt, wenn deren Geschwindigkeit oberhalb des Grenzwertes liegt.

Vorteilhafterweise sind die Darstellungen der Geschwindigkeiten numerische Werte die jeweils zumindest teilweise eine Abbildung eines Fahrzeuges im Bilddokument überdecken. Dabei sollte die Darstellung in rot sein, wenn die Geschwindigkeit oberhalb des Grenzwertes liegt und in grün sein, wenn sie unterhalb des Grenzwertes liegt.

Für eine visuell noch überzeugendere Dokumentation wird aus den fahrzeugspezifischen Messdaten der mit dem Datenpaket abgespeicherten Messdatensätze jeweils der Fahrbahnstreifen abgeleitet, auf dem die Fahrzeuge fahren und eine Kennung für den jeweiligen Fahrbahnstreifen der Geschwindigkeit zugeordnet dargestellt.

Anhand der Zeichnung wird das Verfahren im Folgenden beispielhaft näher erläutert.

Es zeigt:

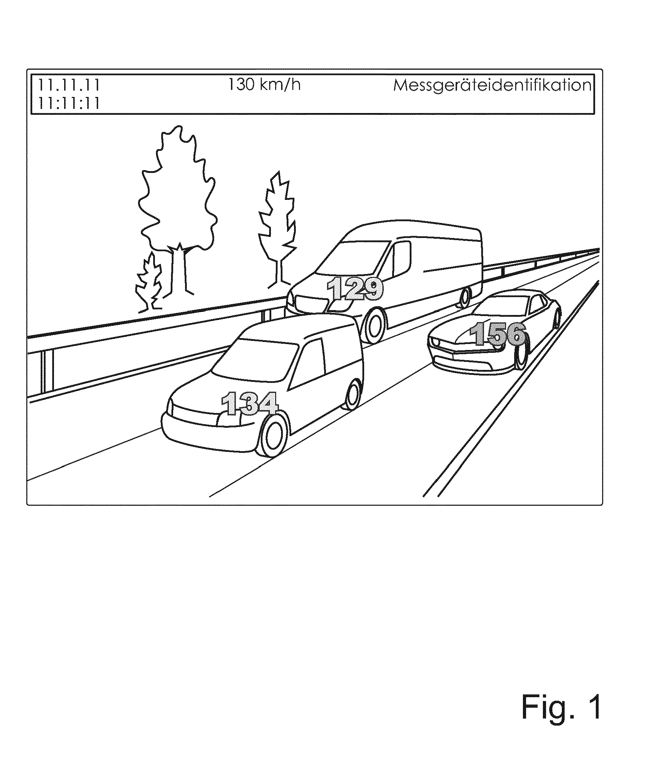

Fig. 1 ein Bilddokument.

Zur Durchführung des Verfahrens wird eine mehrzielfähige wellenstrahlbasierte Messeinrichtung, wie sie aus dem Stand der Technik bekannt ist und deren Arbeitsweise eingangs erläutet wurde, zu einer Fahrbahn so ausgerichtet, dass deren Messstrahlung mehrere Fahrbahnstreifen überdeckt. Die Fahrzeuge werden, während sie einen so gebildeten Messbereich durchfahren, durch Einzelmessungen zu mehreren zeitlich aufeinanderfolgenden Messzeitpunkten erfasst. Aus den Messergebnissen kann pro Messzeitpunkt und pro Fahrzeug ein Messdatensatz mit fahrzeugspezifischen Messdaten abgeleitet werden.

Der früheste Messzeitpunkt, zu dem ein Messdatensatz abgespeichert werden kann, wird von der Verifikation der fahrzeugspezifischen Messdaten eines Fahrzeuges bestimmt. Er ist gegeben, wenn aus den erhaltenen Messergebnissen ein Model für ein Fahrzeug abgeleitet werden konnte und somit diesem Model eine Geschwindigkeit zugeordnet werden kann. Ein Fahrzeug, für welches vollständige Messdaten vorliegen, die als Messdatensatz abgespeichert werden können, gilt als ein identifiziertes Fahrzeug.

Mehrzielfähige (multitargetfähige) Messeinrichtungen, wie Laserscanner und trackende Radarsensoren, sind in der Lage, gleichzeitig Modelle von mehreren Fahrzeugen zu verfolgen (tracken) und deren fahrzeugspezifischen Messdaten, jeweils als ein Messdatensatz, jederzeit oder an einem vordefinierten Triggerzeitpunkt an eine Auswerteeinrichtung zu leiten. Dabei können die Messdatensätze alle interessierenden fahrzeugspezifischen Messdaten der Trajektorie (positions- und bewegungsrelevante Daten), wie die Fahrzeuggeschwindigkeit, die Beschleunigung, die Entfernung zur Messeinrichtung und auch den Winkel zu einer durch die Messeinrichtung definierten Achse, liefern.

Als vordefinierter Triggerzeitpunkt zur Weiterleitung eines Messdatensatzes kann eine ausgewählte Position konfiguriert werden. Das kann die Position eines realen Haltebalkens auf der Fahrbahn aber auch eine beliebig ausgewählte Position sein, die in der Messeinrichtung als virtuelle Triggerlinie parametrisiert wird. Üblicherweise wird pro Fahrstreifen mindestens eine virtuelle Triggerlinie parametrisiert. Wenn ein identifiziertes Fahrzeug die virtuelle Triggerlinie erreicht, wird die Geschwindigkeit des identifizierten Fahrzeugs mit einem Grenzwert verglichen. Liegt die Geschwindigkeit oberhalb des Grenzwertes, dann gilt dieses Fahrzeug als identifiziertes Verletzerfahrzeug und es wird eine Bildaufnahme (Verstoßfoto) ausgelöst und ein Bilddatensatz erstellt und abgespeichert. Außerdem werden die zu diesem Zeitpunkt vorliegenden Messdatensätze der anderen gegebenenfalls angemessenen und identifizierten Fahrzeuge des letzten Messzeitpunktes an die Auswerteeinrichtung weitergeleitet. Statt einer Position kann als vordefinierter Triggerpunkt auch ein Zeitpunkt konfiguriert werden, der aus der ermittelten Geschwindigkeit eines identifizierten Verletzerfahrzeuges als Prognose zur Erreichung einer vorgegebenen Position bestimmt wird oder der nach einer vorgegebenen Verzögerungszeit erreicht wird.

Soll der Triggerpunkt nach einer vorgegebenen Verzögerungszeit erreicht werden, dann sollte diese größer als der Totzeitraum sein, in dem die Kamera nach einem Auslösen nicht erneut ausgelöst werden kann und maximal so groß, dass sich das identifizierte Verletzerfahrzeug noch im Objektfeld der Kamera befindet. Der Messbereich und das Objektfeld werden in ihrer Lage so aufeinander abgestimmt, dass sich das identifizierte Verletzterfahrzeug nach einer in den angegebenen Grenzen liegenden und damit geeigneten Verzögerungszeit an einer zur Kamera in einem vorgegebenen Abstand gedachten virtuellen Triggerlinie (Fotolinie) befindet. Die Verzögerungszeit wird damit innerhalb denkbarer Geschwindigkeitstoleranzen unterschiedlich sein. Sie könnte auch in Verbindung mit einem großen Tiefenschärfebereich der Kamera fest vorgegeben sein, was jedoch den Nachteil hätte, dass in den Bilddokumenten das jeweils identifizierte Verletzterfahrzeug bei unterschiedlichen Geschwindigkeiten, aufgrund der unterschiedlich zurückgelegten Wege innerhalb eines festen Zeitraumes, in einer unterschiedlichen Entfernung zur Kamera und damit in unterschiedlicher Größe abgebildet werden. Nachteilig wäre auch, dass diese fest vorgegebene Verzögerungszeit nur so lang sein darf, dass das Verletzerfahrzeug mit einer maximal denkbaren Geschwindigkeit noch abgebildet wird. Da gegebenenfalls weitere identifizierte Fahrzeuge in der Regel hinter dem identifizierten Verletzerfahrzeug fahren, befinden auch sie sich zwingend noch im Objektfeld der Kamera.

Der Erfindung liegt die Idee zugrunde, neben der Geschwindigkeit des identifizierten Verletzterfahrzeuges auch die Geschwindigkeiten der anderen angemessenen und identifizierten Fahrzeuge in einem Bilddokument zu dokumentieren. Das setzt voraus, dass die abgespeicherten Bilddaten, aus welchen das Bilddokument generiert wird, Bilddaten von allen identifizierten Fahrzeugen enthält, für die ein Messdatensatz abgespeichert wurde. Darüber hinaus müssen die Messdatensätze die vollständigen Messdaten enthalten, die es erlauben, den abgebildeten Fahrzeugen jeweils eine bestätigte Geschwindigkeit zuzuordnen und sie innerhalb der Bildaufnahme, welche mit dem Auslösen der Kamera erstellt wird, zu identifizieren.

Um alle Fahrzeuge, zu denen ein Messdatensatz abgespeichert wurde, in der Bildaufnahme abzubilden, muss das Objektfeld der Kamera zum Messbereich des Messgerätes so angeordnet sein, dass sich alle diese identifizierten Fahrzeuge zum Zeitpunkt des Auslösens der Kamera im Objektfeld befinden. Das sind insbesondere Fahrzeuge, die in gleicher Höhe oder nur knapp hinter dem das Auslösen der Kamera verursachenden identifizierten Verletzerfahrzeug auf anderen Fahrbahnstreifen fahren.

Die weitergeleiteten Messdatensätze werden gemeinsam mit Identifikationsdaten, wie Datum, Uhrzeit, Ort sowie Messgeräteangaben, und den Bilddaten der Bildaufnahme als ein Datenpaket abgespeichert. Aus dem Datenpaket wird ein Bilddokument generiert, bei dem in die in der Bildaufnahme abgebildete Szene die Identifikationsdaten und fahrzeugspezifische Messdaten aller identifizierten Fahrzeuge eingeblendet werden. Neben der Geschwindigkeit können z. B. der Fahrbahnstreifen, auf der ein Fahrzeug fährt, solche fahrzeugspezifische Messdaten sein.

Vorteilhaft werden die Geschwindigkeiten als numerische Werte jeweils auf der Abbildung des zugeordneten Fahrzeuges dargestellt. Zur doppelten Sicherheit könnte außer der Geschwindigkeit z. B. die Nummer eines Fahrbahnstreifens in Form eines numerischen Wertes, insbesondere mit einem vorangestellten Buchstaben, z. B. "L" für den ersten Buchstaben der englischen Bezeichnung "lane" für Fahrbahnstreifen, auf der Abbildung des zugeordneten Fahrzeuges dargestellt sein.

Es ist von Vorteil die Geschwindigkeiten der dargestellten Fahrzeuge, in rot anzugeben, die oberhalb eines vorgegebenen Grenzwertes liegen und die zulässigen Geschwindigkeiten, die unterhalb des Grenzwertes liegen, in grün darzustellen.

Zur Durchführung des Verfahrens werden eine Kamera und ein wellenstrahlbasiertes Messgerät, z. B. ein Radargerät oder ein Laserscanner, zueinander und zur Fahrbahn ausgerichtet positioniert.

Das Objektfeld der Kamera und der Messbereich des Messgerätes müssen dabei so zur Fahrbahn und zueinander angeordnet sein, dass das Objektfeld über die Breite der Fahrbahn alle Fahrbahnstreifen erfasst, die auch durch den Messbereich erfasst werden. Vorteilhaft werden alle Fahrbahnstreifen einer Fahrtrichtung von dem Messbereich überdeckt. Über die Länge der Fahrbahn kann das Objektfeld in Fahrtrichtung hinter, teilweise hinter, oder auch im Messbereich liegen. Es sollte wenigstens dort innerhalb des Messbereiches beginnen, wo in der Regel ein im Messbereich fahrendes Fahrzeug identifiziert wird, damit auch das letzte identifizierte Fahrzeug abgebildet wird, wenn das identifizierte Verletzerfahrzeug die Fotolinie erreicht hat.

Wird das Objektfeld so zum Messbereich angeordnet, dass ein Fahrzeug unmittelbar nach dem alle Messdaten von ihm zur Identifikation vorliegen in das Objektfeld einfährt, dann ist abgesichert, dass von allen Fahrzeugen, die im Bilddokument abgebildet sind, vollständige Messdaten vorliegen, sodass jedem abgebildeten Fahrzeug eine verifizierte Geschwindigkeit zugeordnet werden kann.

Vorteilhaft wird die Messeinrichtung so zur Fahrbahn ausgerichtet, dass auf die Messeinrichtung zukommende Fahrzeuge über eine lange Zeit durch den Messbereich fahren bzw. bereits in einer recht großen Entfernung zur Messeinrichtung in den Messbereich einfahren. Das ist insbesondere gegeben, wenn die Messeinrichtung oberhalb einer geradlinigen Fahrbahn angeordnet ist. Ein identifiziertes Fahrzeug befindet sich zum Zeitpunkt der Identifikation dann immer noch verhältnismäßig weit weg von der Messeinrichtung und einer virtuellen Triggerlinie (Fotolinie) bei deren Erreichen die Kamera ausgelöst würde. Bis dieses identifizierte Fahrzeug die Fotolinie erreicht hat, die zwangsläufig im Objektfeld der Kamera liegt, können weitere Fahrzeuge identifiziert werden. Damit auch diese sicher auf der Abbildung erscheinen, muss das Objektfeld soweit in den Messbereich reichen, dass ein Ort, an dem ein Fahrzeug frühestens als identifiziert gilt, mit erfasst ist.

Das Verfahren ist insbesondere geeignet zur Überwachung von Verkehrsszenen mit einem hohen und dichten Verkehrsaufkommen, in denen üblicherweise mehrere Fahrzeuge nebeneinander und dicht hintereinander fahren.

## Patentansprüche

1. Verfahren zur Dokumentation der Geschwindigkeiten mehrerer zeitgleich auf einer Fahrbahn fahrenden Fahrzeuge, bei dem
Fahrzeuge zeitgleich einen mehrere Fahrbahnstreifen einer Fahrbahn überdeckenden Messbereich einer strahlenbasierten mehrzielfähigen Messeinrichtung durchfahren und zu mehreren Messzeitpunkten fahrzeugspezifische Messdaten, zu denen Geschwindigkeiten und Entfernungen gehören, erfasst werden, die messzeitpunkt- und fahrzeugbezogen als Messdatensätze abgelegt werden, sobald die Fahrzeuge anhand der Messdaten identifiziert werden können,
die Geschwindigkeit der Fahrzeuge bei Erreichen eines Triggerpunktes mit einem Grenzwert verglichen wird und bei Feststellung einer Geschwindigkeit oberhalb des Grenzwertes das Fahrzeug als Verletzerfahrzeug identifiziert wird, gegebenenfalls eine Kamera ausgelöst wird, mit der eine Bildaufnahme erstellt wird, mit einer Abbildung von dem Verletzerfahrzeug,
dann der letzte zuvor abgelegte Messdatensatz des Verletzerfahrzeuges gemeinsam mit durch die Bildaufnahme gewonnenen Bilddaten und mit Identifikationsdaten, wie Datum, Uhrzeit und Ort, als ein Datenpaket abgespeichert wird und
aus dem Datenpaket ein Bilddokument generiert wird, in dem die Geschwindigkeit des Verletzerfahrzeuges, der Abbildung des Verletzerfahrzeuges zugeordnet dargestellt ist, **dadurch gekennzeichnet,**
**dass** jeweils der letzte vor Auslösen der Kamera abgelegte Messdatensatz der zeitgleich erfassten und identifizierten Fahrzeuge dem Datenpaket zugeordnet abgespeichert wird,
in der Bildaufnahme auch zeitgleich erfasste und identifizierter Fahrzeuge abgebildet werden und
in dem Bilddokument die Geschwindigkeiten den Abbildungen der zeitgleich erfassten und identifizierten Fahrzeuge zugeordnet dargestellt werden.

2. Verfahren nach Anspruch 1, **dadurch gekennzeichnet,**
**dass** nur zu den Abbildungen der zeitgleich erfassten und identifizierten Fahrzeuge deren Geschwindigkeit dargestellt wird, wenn deren mit dem Datenpaket abgespeicherter Messdatensatz eine Entfernung zur Messeinrichtung oder zur Triggerlinie umfasst, die beim Auslösen der Kamera unterhalb eines vorgegebenen Schwellwertes liegt.

3. Verfahren nach Anspruch 1, **dadurch gekennzeichnet,**
**dass** die Geschwindigkeiten der abgespeicherten Messdatensätze der zeitgleich erfassten und identifizierten Fahrzeuge mit dem Grenzwert verglichen werden und nur zu den Abbildungen der zeitgleich erfassten und identifizierten Fahrzeuge deren Geschwindigkeit dargestellt wird, wenn deren Geschwindigkeit oberhalb des Grenzwertes liegt.

4. Verfahren nach Anspruch 1, **dadurch gekennzeichnet,**
**dass** die Darstellungen der Geschwindigkeiten numerische Werte sind, die jeweils zumindest teilweise eine Abbildung eines Fahrzeuges im Bilddokument überdecken.

5. Verfahren nach Anspruch 4, **dadurch gekennzeichnet,**
**dass** die Darstellungen in rot sind, wenn die Geschwindigkeit oberhalb des Grenzwertes liegt und in grün sind, wenn sie unterhalb des Grenzwertes liegt.

6. Verfahren nach Anspruch 4, **dadurch gekennzeichnet,**
**dass** aus den fahrzeugspezifischen Messdaten der mit dem Datenpaket abgespeicherten Messdatensätze jeweils der Fahrbahnstreifen abgeleitet wird, auf dem die Fahrzeuge jeweils fahren und eine Kennung für den jeweiligen Fahrbahnstreifen der Geschwindigkeit zugeordnet dargestellt wird.
